# FASCICULE DE BREVET EUROPEEN

(11) **EP 2 922 787 B1**
(45) Date de publication et mention de la délivrance du brevet: **11.07.2018**
(21) Numéro de dépôt: 13826858.6
(22) Date de dépôt: 22.11.2013
(51) Int. Cl.: C01B 33/26, B82Y 30/00, B82Y 40/00

(54) **PROCÉDÉ DE FABRICATION DE NANOTUBES HYBRIDES D'IMOGOLITE**
VERFAHREN ZUR HERSTELLUNG VON HYDRIDEN IMOGOLITNANORÖHRCHEN
METHOD FOR MANUFACTURING HYBRID IMOGOLITE NANOTUBES

(30) Priorité: 23.11.2012 FR 1261194
(43) Date de publication de la demande: 30.09.2015
(73) Titulaire: Commissariat à l'Énergie Atomique et aux Énergies Alternatives, 75015 Paris (FR)
(72) Inventeur: ROULEAU, Béatrice, F-91550 Paray Vieille -Poste (FR); THILL, Antoine, F-92260 Fontenay aux Roses (FR); PONCELET, Olivier, F-38000 Grenoble (FR)
(74) Mandataire: Gevers & Orès
(86) Numéro de dépôt international: PCT/IB2013/060337
(87) Numéro de publication internationale: WO 2014/080370

(56) Documents cités:
- EP-A1- 1 112 959
- Cristina Zanzottera: "Hybrid organic/inorganic nanotubes of imogolite type", , 6 octobre 2012 (2012-10-06), pages 1-202, XP055074134, Extrait de l'Internet: URL:http://porto.polito.it/2496100/1/PhD Thesis - Zanzottera.pdf [extrait le 2013-08-05]
- ILARIA BOTTERO ET AL: "Synthesis and characterization of hybrid organic/inorganic nanotubes of the imogolite type and their behaviour towards methane adsorption", PHYSICAL CHEMISTRY CHEMICAL PHYSICS, vol. 13, no. 2, 3 novembre 2010 (2010-11-03), page 744, XP055074055, ISSN: 1463-9076, DOI: 10.1039/c0cp00438c
- CRISTINA ZANZOTTERA ET AL: "CO 2 Adsorption on Aluminosilicate Single-Walled Nanotubes of Imogolite Type", JOURNAL OF PHYSICAL CHEMISTRY C, vol. 116, no. 38, 27 septembre 2012 (2012-09-27), pages 20417-20425, XP055074054, ISSN: 1932-7447, DOI: 10.1021/jp3061637
- BENOÎT CRETON ET AL: "Molecular dynamics study of hydrated imogolite : 2. Structure and dynamics of confined water", PHYSICAL CHEMISTRY CHEMICAL PHYSICS, vol. 10, no. 32, 19 juin 2008 (2008-06-19) , page 4879, XP055074127, ISSN: 1463-9076, DOI: 10.1039/b803479f
- WILSON M A ET AL: "Tetrahedral rehydration during imogolite formation", JOURNAL OF NON-CRYSTALLINE SOLIDS, NORTH-HOLLAND PHYSICS PUBLISHING. AMSTERDAM, NL, vol. 296, no. 3, 1 décembre 2001 (2001-12-01), pages 172-181, XP004330348, ISSN: 0022-3093, DOI: 10.1016/S0022-3093(01)00908-5
- BARRETT S M ET AL: "The synthesis and characterization of imogolite", EUROPEAN POLYMER JOURNAL, PERGAMON PRESS LTD. OXFORD, GB, vol. 27, no. 7, 1 janvier 1991 (1991-01-01), pages 609-612, XP024052985, ISSN: 0014-3057, DOI: 10.1016/0014-3057(91)90144-D [extrait le 1991-01-01]

## Description

La présente invention concerne un procédé de fabrication de nanotubes hybrides d'imogolite, ainsi que les nanotubes hybrides d'imogolite susceptibles d'être obtenus via ce procédé.

L'imogolite, aluminosilicate filamenteux, tubulaire et cristallisé, présent à l'état naturel dans les cendres volcaniques et dans certains sols, suscite actuellement un grand intérêt. L'imogolite présente en effet de nombreux avantages par rapport aux nanotubes de carbone, du fait notamment de sa totale transparence (l'imogolite artificiel est incolore), ses procédés de synthèse en milieu liquide contrôlés permettant de maîtriser la longueur des nanotubes (procédé reproductible), tout en évitant tout risque d'inhalation par les manipulateurs et utilisateurs finaux.

Les nanotubes d'imogolite demeurent néanmoins des matériaux inorganiques hydrophiles incompatibles avec des molécules hydrophobes et difficiles à formuler dans des matrices organiques.

Plusieurs méthodes ont été envisagées pour améliorer la compatibilité de l'imogolite avec les molécules et les milieux non polaires :
- des procédés par fonctionnalisation externe comme ceux décrits par K. Yamamoto et al., Chemistry Letters, 2001, 1162-1163 ; B. H. Bac et al., Inorganic Chemistry Communications, 12, 2009, 1045-1048 ; W. Ma et al., Chem. Commun., 2011, 47, 5813-5815,
- des procédés par fonctionnalisation interne comme celui décrit par I. Bottero et al., Phys. Chem. Chem. Phys., 2010, dans lequel des groupes SiCH₃ sont introduits à la place des groupes SiOH naturellement présents sur la surface interne de l'imogolite, ou encore celui de D-Y. Kang et al., J. Phys. Chem., 2011, 115, 7676-7685, qui décrit une méthode de post-fonctionnalisation de l'imogolite par évaporation sous vide de précurseurs organiques.
Un procédé direct pour la fabrication de nanotubes méthyl-Imogolite a été décrit par Zanzottera et al., J.Phys.Chem. C, 116, 20417-20425, et dans le pHD de Zanzottera, Hybrid organic/ inorganic nanotubes of imogolite type, 2012, pages 1-202. Ces méthodes complexes présentent néanmoins plusieurs inconvénients : le procédé d'I. Bottero *et al*., par exemple, nécessite la mise en oeuvre à la fois d'une étape de lavage par centrifugation et une étape de dilution avant chauffage, le procédé de D-Y. Kang nécessitant quant à lui la manipulation coûteuse des nanotubes sous forme déshydratée. Dans le cas de nanoparticules fibreuses, il peut également être nécessaire de se protéger des risques d'inhalation (manipulation dangereuse).

Le problème technique à résoudre par rapport à cet état de l'art consiste en la mise au point de charges minérales qui seraient compatibles avec des molécules et des milieux non polaires, sans en altérer la transparence.

De manière tout à fait surprenante, les Inventeurs ont réussi à élaborer un procédé de fabrication de nanotubes hybrides à base d'imogolite, sans compromettre la transparence des suspensions et des films. Les nanotubes hybrides d'imogolite de l'invention présentent, en outre, un double caractère hydrophile à l'extérieur du nanotube et hydrophobe à l'intérieur du nanotube.

Le procédé mis au point par les Inventeurs présente encore l'avantage de ne nécessiter aucune étape de centrifugation, de dilution, de séchage, ni de mise sous vide. Le procédé est donc très simple à mettre en oeuvre, et économiquement plus avantageux et moins dangereux pour les manipulateurs finaux que les procédés de l'art antérieur.

Le procédé de l'invention permet l'obtention de nanotubes hybrides d'imogolite, dont la surface interne peut être entièrement fonctionnalisée, lesdits nanotubes étant obtenus en grande quantité et avec un excellent rendement.

Ainsi, l'invention concerne un procédé de fabrication de nanotubes hybrides d'imogolite comprenant les étapes suivantes :
(i) dissolution d'un précurseur de l'aluminium dans une solution aqueuse, ladite étape de dissolution pouvant être réalisée sous agitation, et de préférence dans un récipient en téflon ou en verre,
(ii) sous agitation, ajout à la solution d'aluminium obtenue à l'issu de l'étape (i) d'au moins un alcoxyde de silicium dont le silicium porte à la fois des substituants hydrolysables et au moins un substituant non hydrolysable, le rapport molaire Al/Si devant être compris entre 1 et 4, de préférence entre 1,5 et 2,5, et encore plus préférentiellement égal à 2,
(iii) sous agitation, ajout d'une base à la solution d'aluminosilicate obtenue à l'issu de l'étape (ii), jusqu'à obtention d'un rapport d'hydrolyse (rapport molaire base/aluminium) compris entre 1 et 3, de préférence entre 1,5 et 2,5, et encore plus préférentiellement égal à 2,
(iv) maintien de l'agitation pendant une durée d'au moins 15 heures, et de préférence d'au moins 20 heures,
(v) chauffage de la solution obtenue à l'issu de l'étape (iv) à une température comprise entre 50 et 150°C, pendant une durée comprise entre 2 et 8 jours.

Au sens où l'entend l'invention, l'expression « substituant non hydrolysable » désigne un substituant qui ne se sépare pas de l'atome de silicium au cours du procédé, et en particulier au cours de l'hydrolyse basique. Au contraire, l'expression «substituant hydrolysable » désigne un substituant qui est éliminé lors de l'hydrolyse basique.

Selon un mode de réalisation avantageux, le précurseur de l'aluminium mis en oeuvre lors de l'étape (i) est choisi parmi le perchlorate d'aluminium Al(ClO₄)₃, le nitrate d'aluminium Al(NO₃)₃ ou le chlorure d'aluminium AlCl₃, le perchlorate d'aluminium Al(ClO₄)₃ étant le précurseur préféré.

La concentration en aluminium de la solution aqueuse obtenue à l'issu de l'étape (i) peut être comprise entre 0,01 et 1 mol.L⁻¹, et de préférence entre 0,05 et 0,1 mol.L⁻¹.

De manière avantageuse, l'alcoxyde de silicium ou le mélange d'alcoxydes de silicium ajoutés lors de l'étape (ii) répondent à la formule X-Si(OR)₃ dans laquelle R est un groupe alkyle ou alcényle linéaire ou ramifié en C₁-C₆, ou un groupe phényle, ledit groupe R pouvant éventuellement porter un substituant choisi parmi -OH, -NH₂, -COOH, un groupe phényle ou un atome d'halogène, et X est un groupe alkyle linéaire ou ramifié en C₁-C₁₂. De préférence, R représente un groupe méthyle, éthyle, propyle, butyle ou vinyle, et de manière encore plus préférée R est un groupe méthyle ou éthyle. De préférence, X est un groupe méthyle, éthyle ou propyle, et de manière encore plus préférée X est un groupe méthyle. Les alcoxydes de silicium préférés sont : le méthyltriéthoxysilane (OC₂H₅)₃SiCH₃, le méthyltriméthoxysilane (OCH₃)₃SiCH₃ et le phényltriéthoxysilane (OC₂H₅)₃SiC₆H₅.

Le rapport d'hydrolyse est un paramètre de synthèse bien connu de l'homme de l'art qui peut être déterminé tout au long de la réaction à partir du pH. Il correspond au rapport molaire base/aluminium (ratio entre la concentration en base ajoutée et la quantité d'aluminium initialement présent).

La base ajoutée lors de l'étape (iii) peut être choisie parmi l'hydroxyde de sodium, l'hydroxyde de potassium ou l'hydroxyde de lithium, et de préférence ladite base est l'hydroxyde de sodium. Sa concentration peut être comprise entre 0,1 et 3 mol.L⁻¹. Lors de l'étape (iii), l'ajout de la base est avantageusement réalisé à un débit compris entre 1 et 10 mL.min⁻¹, et de préférence entre 3 et 5 mL.min⁻¹.

Le chauffage de l'étape (v) peut être réalisé à une température comprise entre 70 et 150°C, et de préférence entre 80 et 90°C, soit en autoclave, soit en étuve, soit à reflux.

Selon un mode de réalisation avantageux, la durée de l'étape (v) de chauffage est comprise entre 4 et 6 jours.

Le procédé de l'invention peut en outre comprendre une étape (vi) de lavage ou de concentration de la solution obtenue à l'issu de l'étape (v). L'étape de lavage sert à éliminer du milieu réactionnel les sous-produits formés au cours des étapes (i) à (iii), tels que les ions résiduels provenant de la base utilisée lors de l'étape (iii) ou les alcools provenant de l'hydrolyse de l'alcoxyde. L'étape (vi) peut donc être effectuée soit par lavage par sédimentation successives ou par dialyse, soit par concentration par ultrafiltration.

Une étape (vii) de lyophilisation subséquente peut également être réalisée pour obtenir les nanotubes hybrides d'imogolite synthétisés sous forme solide.

Un autre objet de l'invention concerne les nanotubes hybrides d'imogolite en tant que tels, susceptibles d'être obtenus selon le procédé de l'invention, et comprenant simultanément une surface hydrophile et une surface hydrophobe.

Les nanotubes hybrides d'imogolite de l'invention présentent un diamètre externe allant de 3,3 à 3,4 nm, mesuré par diffusion des rayons X aux petits angles (SAXS), ce diamètre étant beaucoup plus large que ceux obtenus via les procédés décrits dans I. Bottero et al., Phys. Chem. Chem. Phys., 2010 (diamètre d = 2,99-3,02 nm) et D-Y. Kang et al., J. Phys. Chem., 2011, 115, 7676-7685 (diamètre d = 2,2-2,8 nm).

Les mesures de cryo-microscopie électronique (Cryo-TEM : Cryogenic Transmission Electron Microscopy) ont également permis de déterminer une longueur de nanotubes hybrides d'imogolite de l'invention comprise entre 100 et 200 nm (bornes incluses).

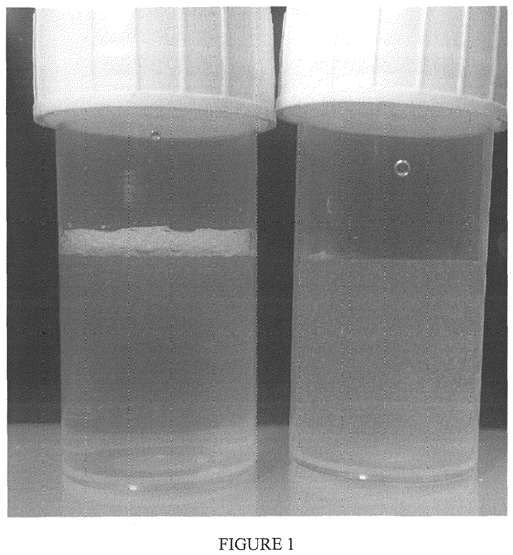

Les Inventeurs ont observé que les nanotubes hybrides d'imogolite obtenus selon le procédé de l'invention, contrairement aux nanotubes hybrides d'imogolite obtenus selon la méthode décrite par I. Bottero et al., Phys. Chem. Chem. Phys., 2010, forment une mousse lorsqu'ils sont dispersés en solution (Figure 1). La formation de cette mousse traduit une meilleure adsorption des nanotubes de l'invention à l'interface eau/air, et par conséquent un meilleur pouvoir tensioactif que ceux obtenus selon la méthode d'I. Bottero et al., Phys. Chem. Chem. Phys., 2010.

Outre les dispositions qui précèdent, l'invention comprend encore d'autres dispositions qui ressortiront du complément de description qui suit, qui se rapporte à des exemples de synthèse de nanotubes hybrides d'imogolite, ainsi qu'aux figures annexées dans lesquelles :
- la Figure 1 compare une dispersion de nanotubes hybrides d'imogolite obtenus selon le procédé de l'invention à une dispersion de nanotubes hybrides d'imogolite obtenus selon la méthode d'I. Bottero et al., Phys. Chem. Chem. Phys., 2010,
- la Figure 2 représente une courbe de diffusion de rayons X aux petits angles (SAXS) de nanotubes hybrides d'imogolite synthétisés selon l'exemple 1,
- la Figure 3 est une image par cryo-TEM des nanotubes hybrides d'imogolite synthétisés selon l'exemple 1,
- la Figure 4 est un spectre infrarouge d'un nanotube hybride d'imogolite synthétisé selon l'exemple 1,
- la Figure 5 représente une courbe de diffusion de rayons X aux petits angles (SAXS) de nanotubes hybrides d'imogolite synthétisés selon l'exemple 2,
- la Figure 6 est une image cryo-TEM des nanotubes hybrides d'imogolite synthétisés selon l'exemple 2,
- la Figure 7 est un spectre infrarouge d'un nanotube hybride d'imogolite synthétisé selon l'exemple 2.

### PARTIE EXPÉRIMENTALE :

### Exemple 1 :

30 mL d'une solution d'aluminosilicate dont le rapport molaire aluminium/silicium est fixé à 2 et le rapport d'hydrolyse (rapport molaire hydroxyde de sodium/aluminium) est également fixé à 2, a été préparé comme suit :
- une solution aqueuse d'aluminium est préparée par dissolution de 0,487 g de perchlorate d'aluminium dans de l'eau pure afin d'obtenir une solution à 0,1 mol.L⁻¹, puis transvasée dans une fiole jaugée de 10 mL,
- une solution de 50 mL d'hydroxyde de sodium à 0,1 mol.L⁻¹ est préparée par dissolution de 0,2 g d'hydroxyde de sodium, puis transvasée dans une fiole jaugée de 20 mL.

La solution de perchlorate d'aluminium est transvasée dans un récipient en téflon contenant un barreau aimanté, puis mis sous agitation. Du méthyltriéthoxysilane (99,6 µL) est ajouté à la solution. La solution d'hydroxyde de sodium est ensuite ajoutée à un débit de 4 mL.min⁻¹ à l'aide d'une pompe péristaltique. Une fois l'addition terminée, le récipient en téflon est fermé et laissé sous agitation à température ambiante pendant une durée de 20 h, puis placé à l'étuve à 85°C pendant 5 jours. La solution est ensuite lavée et filtrée plusieurs fois dans de l'eau pure en utilisant une membrane 30 kDa.

Pour pouvoir analyser les nanotubes hybrides d'imogolite ainsi préparés, ces derniers ont été lyophilisés sous forme solide. Une poudre blanche, très peu dense et volatile est obtenue.

Le rendement de cette synthèse est d'au moins 50%.

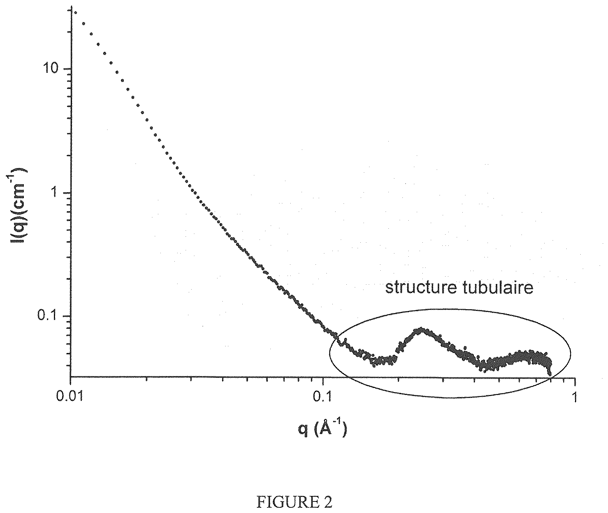

La structure tubulaire des nanotubes hybrides d'imogolite a été mise en évidence par SAXS (Small-Angle X-ray Scattering), cryo-TEM sur un appareil Tecnai G² Polara et spectroscopie IR (infrarouge) sur un appareil Bruker Vertex 70 (Figures 2 à 4).

La courbe de diffusion des rayons X (Figure 2) met en évidence une grande homogénéité de diamètres des nanotubes hybrides d'imogolite ; elle permet également de déterminer la valeur moyenne de ce diamètre, qui est compris entre 3,3 et 3,4 nm.

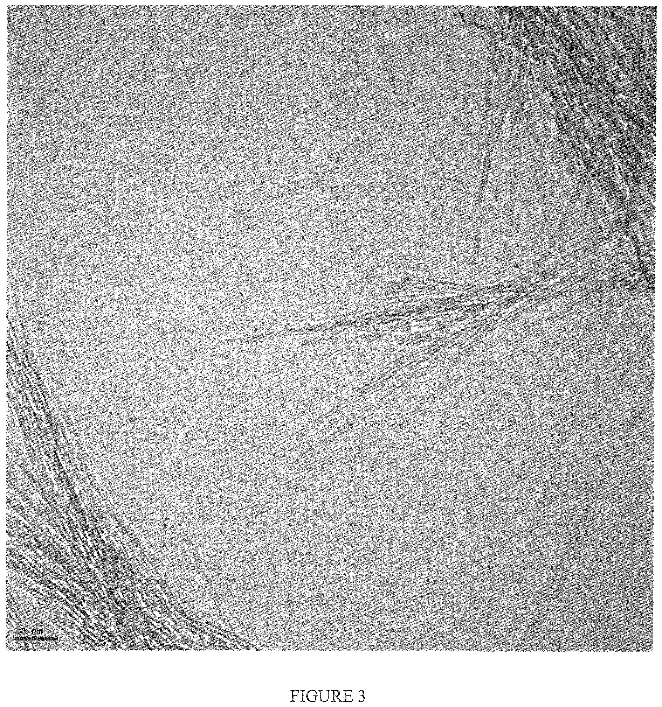

L'image par cryo-TEM (Figure 3) montre la structure tubulaire des nanotubes hybrides d'imogolite, et l'absence d'autres nano-objets dans l'échantillon dialysé. On mesure une longueur moyenne des nanotubes hybrides d'imogolite comprise entre 100 et 200 nm.

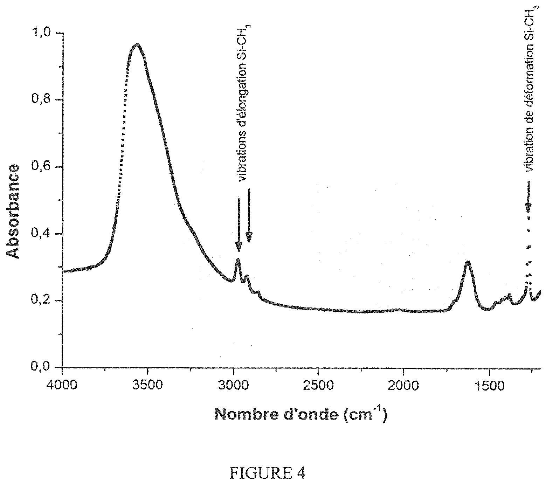

La spectroscopie infrarouge (Figure 4) confirme la structure chimique de l'imogolite.

### Exemple 2 :

30 mL d'une solution d'aluminosilicate dont le rapport molaire aluminium/silicium a été fixé à 2 et le rapport d'hydrolyse (rapport molaire hydroxyde de sodium/aluminium) a également été fixé à 2, a été préparé comme suit :
- une solution aqueuse d'aluminium est préparée par dissolution de 0,487 g de perchlorate d'aluminium dans de l'eau pure afin d'obtenir une solution à 0,1 mol.L⁻¹, puis transvasé dans une fiole jaugée de 10 mL,
- une solution de 50 mL d'hydroxyde de sodium à 0,1 mol.L⁻¹ est préparée par dissolution de 0,2 g d'hydroxyde de sodium, puis transvasée dans une fiole jaugée de 20 mL.

La solution de perchlorate d'aluminium est transvasée dans un récipient en téflon contenant un barreau aimanté, puis mis sous agitation. Du méthyltriméthoxysilane (71,3 µL) est ajouté à la solution. La solution d'hydroxyde de sodium est ensuite ajoutée à un débit de 4 mL.min⁻¹ à l'aide d'une pompe péristaltique. Une fois l'addition terminée, le récipient en téflon est fermé et laissé sous agitation à température ambiante pendant une durée de 20 h, puis placé à l'étuve à 85°C pendant 5 jours. La solution est ensuite lavée et filtrée plusieurs fois dans de l'eau pure en utilisant une membrane 30 kDa.

Le rendement de la synthèse après lavage est supérieur à 50%.

Pour pouvoir analyser les nanotubes hybrides d'imogolite ainsi préparés, ces derniers ont été lyophilisés sous forme solide. Une poudre blanche, très peu dense et volatile est obtenue.

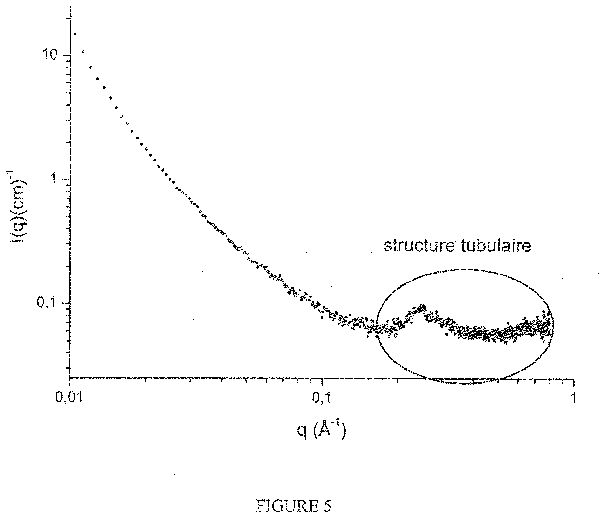

La structure tubulaire des nanotubes hybrides d'imogolite a été mise en évidence par SAXS (Small-Angle X-ray Scattering), cryo-TEM (Cryogenic Transmission Electron Microscopy) et spectroscopie IR (infrarouge) (Figures 5 à 7).

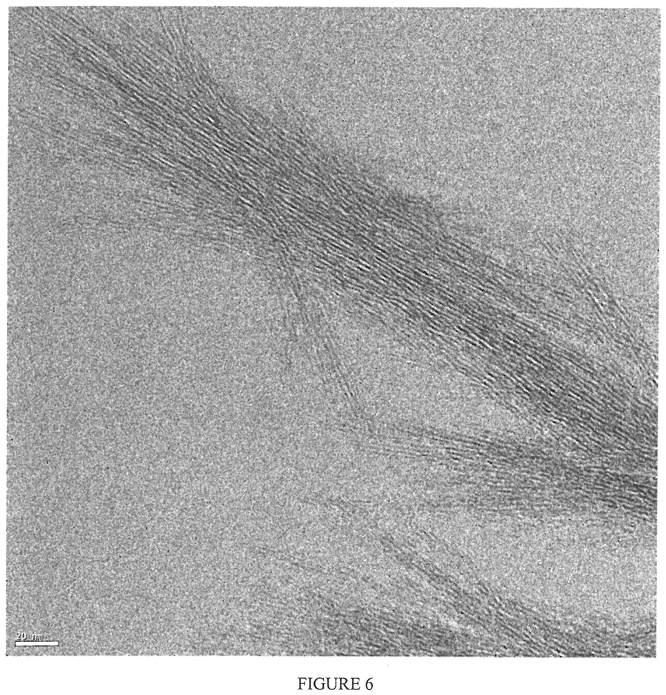

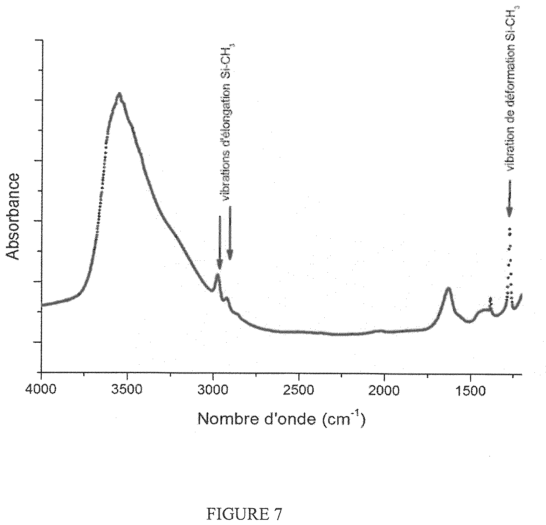

Comme pour l'exemple 1 :
- la courbe de diffusion des rayons X (Figure 5) met en évidence une grande homogénéité de diamètres des nanotubes hybrides d'imogolite ; elle permet également de déterminer la valeur moyenne de ce diamètre qui est compris entre 3,3 et 3,4 nm ;
- l'image par cryo-TEM (Figure 6) montre la structure tubulaire des nanotubes hybrides d'imogolite, et l'absence d'autres nano-objets dans l'échantillon dialysé. Ces images permettent de mesurer une longueur des nanotubes hybrides d'imogolite comprise entre 100 et 200 nm ;
- la spectroscopie infrarouge (Figure 7) confirme la structure chimique de l'imogolite.

## Revendications

1. Procédé de fabrication de nanotubes hybrides d'imogolite, **caractérisé en ce qu'**il comprend les étapes suivantes :
(i) dissolution d'un précurseur de l'aluminium dans une solution aqueuse,
(ii) sous agitation, ajout à la solution d'aluminium obtenue à l'issu de l'étape (i) d'au moins un alcoxyde de silicium dont le silicium porte à la fois des substituants hydrolysables et au moins un substituant non hydrolysable, le rapport molaire Al/Si devant être compris entre 1 et 4,
(iii) sous agitation, ajout d'une base à la solution d'aluminosilicate obtenue à l'issu de l'étape (ii), jusqu'à obtention d'un rapport molaire base/Al compris entre 1 et 3,
(iv) maintien de l'agitation pendant une durée d'au moins 15 heures,
(v) chauffage de la solution obtenue à l'issu de l'étape (iv) à une température comprise entre 50 et 150°C, pendant une durée comprise entre 2 et 8 jours.

2. Procédé selon la revendication 1, dans lequel le précurseur de l'aluminium est choisi parmi le perchlorate d'aluminium Al(ClO₄)₃, le nitrate d'aluminium Al(NO₃)₃ ou le chlorure d'aluminium AlCl₃.

3. Procédé selon la revendication 1 ou la revendication 2, dans lequel la concentration en aluminium de la solution aqueuse obtenue à l'issu de l'étape (i) est comprise entre 0,01 et 1 mol.L⁻¹.

4. Procédé selon l'une des revendications 1 à 3, dans lequel l'alcoxyde de silicium répond à la formule X-Si(OR)₃ dans laquelle R est un groupe alkyle ou alcényle linéaire ou ramifié en C₁-C₆, et de préférence R représente un groupe méthyle ou éthyle, ou un groupe phényle, et X est un groupe alkyle linéaire ou ramifié en C₁-C₁₂.

5. Procédé selon l'une des revendications 1 à 4, dans lequel l'alcoxyde de silicium est choisi parmi le méthyltriéthoxysilane (OC₂H₅)₃SiCH₃, le méthyltriméthoxysilane (OCH₃)₃SiCH₃ ou le phényltriéthoxysilane (OC₂H₅)₃SiC₆H₅.

6. Procédé selon l'une des revendications 1 à 5, dans lequel le rapport molaire Al/Si lors de l'étape (ii) est compris entre 1,5 et 2,5.

7. Procédé selon l'une des revendications 1 à 6, dans lequel la base ajoutée lors de l'étape (iii) est choisie parmi l'hydroxyde de sodium, l'hydroxyde de potassium ou l'hydroxyde de lithium.

8. Procédé selon l'une des revendications 1 à 7, dans lequel l'ajout de la base lors de l'étape (iii) est réalisé à un débit compris entre 1 et 10 mL.min⁻¹.

9. Procédé selon l'une des revendications 1 à 8, dans lequel le rapport molaire base/Al lors de l'étape (iii) est compris entre 1,5 et 2,5.

10. Procédé selon l'une des revendications 1 à 9, dans lequel l'étape (v) de chauffage est réalisée à une température comprise entre 70 et 150°C, et de préférence entre 80 et 90°C.

11. Procédé selon l'une des revendications 1 à 10, dans laquelle l'étape (v) de chauffage est réalisée pendant une durée comprise entre 4 et 6 jours.

12. Procédé selon l'une des revendications 1 à 11, **caractérisé en ce qu'**il comprend une étape (vi) de lavage ou de concentration de la solution obtenue à l'issu de l'étape (v).

13. Procédé selon l'une des revendications 1 à 12, **caractérisé en ce qu'**il comprend une étape (vii) de lyophilisation.

14. Nanotubes hybrides d'imogolite susceptibles d'être obtenus selon le procédé des revendications 1 à 13, **caractérisés en ce qu'**ils comprennent simultanément une surface hydrophile et une surface hydrophobe, et **en ce qu'**ils présentent un diamètre externe allant de 3,3 à 3,4 nm.

15. Nanotubes hybrides d'imogolite selon la revendication 14, **caractérisés en ce qu'**ils présentent une longueur allant de 100 à 200 nm.

## Patentansprüche

1. Verfahren zur Herstellung von hybriden Imogolit-Nanoröhrchen, **dadurch gekennzeichnet, dass** es die folgenden Schritte umfasst:
(i) Auflösen eines Aluminiumvorläufers in einer wässrigen Lösung,
(ii) unter Rühren Zugeben, zu der am Ende des Schrittes (i) erhaltenen Aluminiumlösung, von mindestens einem Siliziumalkoxid, dessen Silizium gleichzeitig hydrolysierbare Substituenten und mindestens einen nicht hydrolysierbaren Substituenten trägt, wobei das Molverhältnis Al/Si im Bereich zwischen 1 und 4 betragen muss,
(iii) unter Rühren Zugeben einer Base zu der am Ende des Schrittes (ii) erhaltenen Aluminiumsilikatlösung bis Erhalt eines Molverhältnisses Base/Al im Bereich zwischen 1 und 3,
(iv) Aufrechterhalten des Rührens über eine Dauer von mindestens 15 Stunden,
(v) Erhitzen der am Ende des Schrittes (iv) erhaltenen Lösung auf eine Temperatur im Bereich zwischen 50 und 150°C über eine Dauer im Bereich zwischen 2 und 8 Tagen.

2. Verfahren nach Anspruch 1, wobei der Aluminiumvorläufer ausgewählt ist aus Aluminiumperchlorat Al(ClO₄)₃, Aluminiumnitrat Al(NO₃)₃ oder Aluminiumchlorid AlCl₃.

3. Verfahren nach Anspruch 1 oder Anspruch 2, wobei die Aluminiumkonzentration der am Ende des Schrittes (i) erhaltenen wässrigen Lösung im Bereich zwischen 0,01 und 1 mol.L⁻¹ beträgt.

4. Verfahren nach einem der Ansprüche 1 bis 3, wobei das Siliziumalkoxid der Formel X-Si(OR)₃ entspricht, wobei R eine geradkettige oder verzweigte C₁-C₆-Alkyl- oder Alkenylgruppe ist, und vorzugsweise R für eine Methyl- oder Ethylgruppe oder eine Phenylgruppe steht, und X eine geradkettige oder verzweigte C₁-C₁₂-Alkylgruppe ist.

5. Verfahren nach einem der Ansprüche 1 bis 4, wobei das Siliziumalkoxid ausgewählt ist aus Methyltriethoxysilan (OC₂H₅)₃SiCH₃, Methyltrimethoxysilan (OCH₃)₃SiCH₃ oder Phenyltriethoxysilan (OC₂H₅)₃SiC₆H₅.

6. Verfahren nach einem der Ansprüche 1 bis 5, wobei das Molverhältnis Al/Si beim Schritt (ii) im Bereich zwischen 1,5 und 2,5 beträgt.

7. Verfahren nach einem der Ansprüche 1 bis 6, wobei die beim Schritt (iii) zugegebene Base ausgewählt ist aus Natriumhydroxid, Kaliumhydroxid oder Lithiumhydroxid.

8. Verfahren nach einem der Ansprüche 1 bis 7, wobei das Zugeben der Base beim Schritt (iii) bei einer Rate im Bereich zwischen 1 und 10 mL.min⁻¹ ausgeführt wird.

9. Verfahren nach einem der Ansprüche 1 bis 8, wobei das Molverhältnis Base/Al beim Schritt (iii) im Bereich zwischen 1,5 und 2,5 beträgt.

10. Verfahren nach einem der Ansprüche 1 bis 9, wobei der Schritt (v) des Erhitzens bei einer Temperatur im Bereich zwischen 70 und 150 °C, und vorzugsweise zwischen 80 und 90 °C ausgeführt wird.

11. Verfahren nach einem der Ansprüche 1 bis 10, wobei der Schritt (v) des Erhitzens über eine Dauer im Bereich zwischen 4 und 6 Tagen ausgeführt wird.

12. Verfahren nach einem der Ansprüche 1 bis 11, **dadurch gekennzeichnet, dass** es einen Schritt (vi) des Waschens oder des Konzentrierens der am Ende des Schrittes (v) erhaltenen Lösung umfasst.

13. Verfahren nach einem der Ansprüche 1 bis 12, **dadurch gekennzeichnet, dass** es einen Schritt (vii) des Lyophilisierens umfasst.

14. Hybride Imogolit-Nanoröhrchen, welche nach dem Verfahren der Ansprüche 1 bis 13 erhalten werden können, **dadurch gekennzeichnet, dass** sie gleichzeitig eine hydrophile Oberfläche und eine hydrophobe Oberfläche umfassen, und dadurch, dass sie einen Außendurchmesser aufweisen, der von 3,3 bis 3,4 nm reicht.

15. Hybride Imogolit-Nanoröhrchen nach Anspruch 14, **dadurch gekennzeichnet, dass** sie eine Länge aufweisen, die von 100 bis 200 nm reicht.

## Claims

1. Method for manufacturing hybrid imogolite nanotubes, **characterised in that** it comprises the following steps:
(i) dissolving an aluminium precursor in an aqueous solution,
(ii) under stirring, adding to the aluminium solution obtained at the end of step (i) at least one silicon alkoxide of which the silicon has hydrolysable substituents and at least one non-hydrolysable substituent, with the Al/Si molar ratio necessarily being between 1 and 4,
(iii) under stirring, adding a base to the aluminosilicate solution obtained at the end of step (ii), until obtaining a base/Al molar ratio between 1 and 3,
(iv) maintaining stirring for a duration of at least 15 hours,
(v) heating the solution obtained at the end of step (iv) to a temperature of 50 to 150 °C, for a duration of 2 to 8 days.

2. Method according to claim 1, wherein the aluminium precursor is chosen from aluminium perchlorate Al(ClO₄)₃, aluminium nitrate Al(NO₃)₃ or aluminium chloride AlCl₃.

3. Method according to claim 1 or claim 2, wherein the concentration in aluminium of the aqueous solution obtained at the end of step (i) is between 0.01 and 1 mol.L⁻¹.

4. Method according to one of claims 1 to 3, wherein the silicon alkoxide is of formula X-Si(OR)₃ wherein R is a linear or branched C₁-C₆ alkyl or alkenyl group, and preferably R represents a methyl or ethyl group, or a phenyl group, and X is a C₁-C₁₂ linear or branched alkyl group.

5. Method according to one of claims 1 to 4, wherein the silicon alkoxide is chosen from methyltriethoxysilane (OC₂H₅)₃SiCH₃, methyltrimethoxysilane (OCH₃)₃SiCH₃ or phenyltriethoxysilane (OC₂H₅)₃SiC₆H₅.

6. Method according to one of claims 1 to 5, wherein the Al/Si molar ratio during the step (ii) is between 1.5 and 2.5.

7. Method according to one of claims 1 to 6, wherein the base added during the step (iii) is chosen from sodium hydroxide, potassium hydroxide or lithium hydroxide.

8. Method according to one of claims 1 to 7, wherein the adding of the base during the step (iii) is carried out at a flow rate between 1 and 10 mL.min⁻¹.

9. Method according to one of claims 1 to 8, wherein the base/Al molar ratio during the step (iii) is between 1.5 and 2.5.

10. Method according to one of claims 1 to 9, wherein the step (v) of heating is carried out at a temperature between 70 and 150 °C, and preferably between 80 and 90 °C.

11. Method according to one of claims 1 to 10, wherein the step (v) of heating is carried out for a duration of 4 and 6 days.

12. Method according to one of claims 1 to 11, **characterised in that** it comprises a step (vi) of washing or of concentration of the solution obtained at the end of step (v).

13. Method according to one of claims 1 to 12, **characterised in that** it comprises a step (vii) of lyophilisation.

14. Hybrid imogolite nanotubes obtainable according to the method of claims 1 to 13, **characterised in that** they simultaneously comprise a hydrophilic surface and a hydrophobic surface, and **in that** they have an outer diameter ranging from 3.3 to 3.4 nm.

15. Hybrid imogolite nanotubes according to claim 14, **characterised in that** they have a length ranging from 100 to 200 nm.
